# EUROPÄISCHE PATENTSCHRIFT

(11) **EP 1 680 612 B1**
(45) Veröffentlichungstag und Bekanntmachung des Hinweises auf die Patenterteilung: **14.05.2008**
(21) Anmeldenummer: 04790830.6
(22) Anmeldetag: 26.10.2004
(51) Int. Cl.: F16H 63/34, F16H 63/20

(54) **SCHALTEINRICHTUNG FÜR EIN MEHRSTUFIGES SCHALTGETRIEBE**
GEAR-SHIFTING DEVICE FOR A MULTI-STAGE MANUAL TRANSMISSION
DISPOSITIF DE PASSAGE DES RAPPORTS DESTINE A UNE BOITE A PLUSIEURS RAPPORTS

(30) Priorität: 03.11.2003 DE 10351131
(43) Veröffentlichungstag der Anmeldung: 19.07.2006
(73) Patentinhaber: ZF FRIEDRICHSHAFEN AG, 88038 Friedrichshafen (DE)
(72) Erfinder: BEER, Uwe, 14476 Fahrland (DE); DRABEK, Michael, 14778 Schenkenberg (DE)
(86) Internationale Anmeldenummer: PCT/EP2004/012045
(87) Internationale Veröffentlichungsnummer: WO 2005/043010

(56) Entgegenhaltungen:
- DE-A1- 4 118 931
- DE-A1- 19 843 584
- DE-A1- 19 951 683
- US-A- 3 581 594

## Beschreibung

Die Erfindung betrifft eine Schalteinrichtung für ein mehrstufiges Schaltgetriebe nachdem Oberbegriff von Anspruch 1.

In mehrstufigen Handschaltgetrieben für Fahrzeuge, die unter Zugkraftunterbrechung geschaltet werden, d. h., dass eine Eingangswelle des Getriebes während des Schaltvorgangs durch eine Anfahrkupplung von einer Antriebsmaschine getrennt wird, kann man den jeweiligen Gang mit einer formschlüssigen Schaltkupplung einlegen, indem eine Schaltverzahnung einer Schiebemuffe in eine Kuppelverzahnung eines Kupplungskörpers geschoben wird, der an einem zu kuppelnden Getriebeelement befestigt ist, z. B. an einem Zahnrad oder Getriebegehäuse. Dabei wird das Drehmoment im geschalteten Zustand von einem Getriebeelement über den Kupplungskörper, die Kuppelverzahnung, die Schaltverzahnung, die Schiebemuffe und die Muffenführung auf ein anderes Getriebeelement, z. B. ein Zahnrad oder eine Welle, übertragen oder am Getriebegehäuse abgestützt.

Der geschaltete Gang bestimmt das Übersetzungsverhältnis und damit das Drehzahlverhältnis zwischen der Eingangswelle und einer Ausgangswelle des Getriebes. Die nicht gekuppelten Getriebeelemente, z. B. frei umlaufende, ständig im Eingriff befindliche. Zahnräder der übrigen Gänge, laufen mit einer ihrer Übersetzung entsprechenden Differenzdrehzahl zu den geschalteten Getriebeelementen. Wird von einem Gang zu einem anderen gewechselt, müssen die zu kuppelnden Teile während des Schaltens auf eine annähernd gleiche Drehzahl gebracht werden, bevor die Schaltverzahnung der Schiebemuffe in die Kuppelverzahnung des zu schaltenden Kupplungskörpers eingreifen kann. Hierzu dienen Synchronisiereinrichtungen.

Die Gänge werden von Zahnradsätzen gebildet, die hintereinander angeordnet sind und zwischen denen sich die Schaltkupplungen befinden. Diese werden durch eine Schalteinrichtung wechselweise entsprechend dem vorgewählten Gang betätigt. Dabei ist darauf zu achten, daß nicht zwei Schaltkupplungen gleichzeitig betätigt werden, da hierdurch das Getriebe beschädigt werden kann, zumindest aber störende Geräusche auftreten und die Zugkraft ungewollt lange unterbrochen ist. Dies kann in Notfallsituationen gefährliche Folgen nach sich ziehen.

Aus der DE 198 43 584 A1 ist eine gattungsgemäße Schalteinrichtung eines Kraftfahrzeuggetriebes bekannt. Jeder Schaltkupplung ist eine Schaltschwinge oder Schaltgabel zugeordnet. Eine Wähl- und Schaltwelle, die quer zu den Schwenkachsen der Schaltschwingen und parallel zu der Drehachse der Schaltkupplungen schwenkbar und axial verschiebbar angeordnet ist, weist Schaltfinger auf, von denen bei einer entsprechenden Verdrehung der Wähl- und Schaltwelle einer in ein Formschlußelement der Schaltschwingen oder Schaltgabeln eingreift und bei einer anschließenden Axialbewegung der Wähl- und Schaltwelle die angewählte Schaltschwinge oder Schaltgabel verschwenkt und damit die zugehörige Schaltkupplung schaltet.

Um sicherzustellen, daß stets nur eine Schaltkupplung betätigt wird und die übrigen Schaltkupplungen bei der Schaltung in ihrer Neutralstellung verriegelt sind, sind an den Schaltschwingen oder Schaltgabeln Fortsätze angeordnet.

Diese weisen jeweils eine Verriegelungsnut auf, in welche an einer Sperrwelle angeordnete Sperrstifte eingreifen. Die Sperrwelle wird mit der Wähl- und Schaltwelle über Zahnsegmente verdreht. Bei der Anwahl eines zu schaltenden Ganges wird die Sperrwelle mit der Wähl- und Schaltwelle verdreht und der der jeweils zu schaltenden Schaltgabel oder Schaltschwinge zugehörige Sperrstift wird aus seiner zugehörigen Verriegelungsnut herausgedreht. Die anderen Sperrstifte befinden sich dann in ihren Verriegelungsnuten und verriegeln die übrigen Schaltschwingen. Die bekannte Sperrvorrichtung ist zwar bereits gut ausgebildet, sie bedarf aber dennoch der weiteren Verbesserung.

Der Erfindung liegt die Aufgabe zugrunde, eine Schalteinrichtung eines mehrstufigen Schaltgetriebes zu verbessern und insbesondere die Anzahl und Komplexität der Bauteile herabzusetzen.

Die Aufgabe wird gemäß der Erfindung durch die Merkmale des Anspruchs 1 gelöst. Weitere Ausgestaltungen ergeben sich aus den Unteransprüchen.

Eine Schalteinrichtung für ein mehrstufiges Schaltgetriebe weist in einem Getriebegehäuse eine verdrehbare und axial verschiebbare Wähl- und Schaltwelle auf. Gabelförmige Schaltelemente sind in Form von Schaltschwingen oder Schaltgabeln vorgesehen. Eine Verriegelungseinrichtung verriegelt beim Schalten eines der Schaltelemente aus einer Neutralstellung in eine Schaltstellung die nicht zu schaltenden Schaltelemente in ihrer Neutralstellung. Jedem Schaltelement ist ein Bolzen zugeordnet, der lösbar in Nuten in dem Schaltelement einrastet und dadurch das Schaltelement in der Neutralstellung oder einer der Schaltstellungen fixiert. Die Verriegelungseinrichtung umfaßt ein parallel zu der Wähl- und Schaltwelle angeordnetes Sperrelement, das Öffnungen aufweist, die mit den Bolzen zusammenwirken. Das Sperrelement bewegt sich bei einer Verdrehung der Wähl- und Schaltwelle axial und gibt dabei an dem zu schaltenden Schaltelement eine Öffnung für den Bolzen frei, während das Sperrelement an den nicht zu schaltenden Schaltelementen die Bolzen in den Öffnungen blockiert und dadurch die nicht zu schaltenden Schaltelemente in ihrer Neutralstellung verriegelt.

Vorzugsweise ist an der Wähl- und Schaltwelle ein Übertragungselement vorgesehen, das die Drehbewegung der Wähl- und Schaltwelle in eine axiale Bewegung des Sperrelementes umsetzt. In einer vorteilhaften Ausgestaltung ist dieses Übertragungselement eine axial feste Wählschwinge mit einer geneigten Ebene, die mit Führungen an dem Sperrelement zusammenwirkt und die Drehbewegung der Wähl- und Schaltwelle in die axiale Bewegung umsetzt.

Bei einer vorteilhaften Ausbildung der Erfindung sind in den Bolzen Aussparungen vorgesehen, in die das Sperrelement zur Blockierung und Verriegelung der nicht zu schaltenden Schaltelemente in ihrer Neutralstellung eingreifen kann.

Eine bevorzugte Ausführungsform weist Federelemente auf, die die Bolzen in die Nuten an den Schaltelementen drücken und dadurch die lösbare Rastierung der Bolzen in den Nuten gewährleisten.

Das Sperrelement ist in einer bevorzugten Ausgestaltung als ein flaches Sperrblech ausgebildet, oder es trägt die Form einer vorzugsweise runden Sperrstange.

Die vorgeschlagene Schalteinrichtung ermöglicht ein Verriegeln einer großen Anzahl von Schaltelementen, ohne andererseits die Bauteilanzahl des Verriegelungssystems übermäßig zu erhöhen. Eine geringe Anzahl an Bauteilen macht das Verriegelungssystem toleranzunempfindlich und führt zu einem direkten Sperrvorgang. An den Schaltelementen sind keine Sperrgeometrien erforderlich, die für die Durchführung des Schaltprozesses nicht erforderlich sind.

Die Erfindung wird anhand einer Zeichnung näher beschrieben.
Es zeigen:
- Fig. 1: eine perspektivische Schalteinrichtung nach dem Stand der Technik;
- Fig. 2: eine Seitendarstellung der erfindungsgemäßen Schalteinrichtung und
- Fig. 3: einen Aufsicht auf die Schalteinrichtung nach Fig. 2 mit einem Schnitt B-B im Bereich des Sperrelementes.

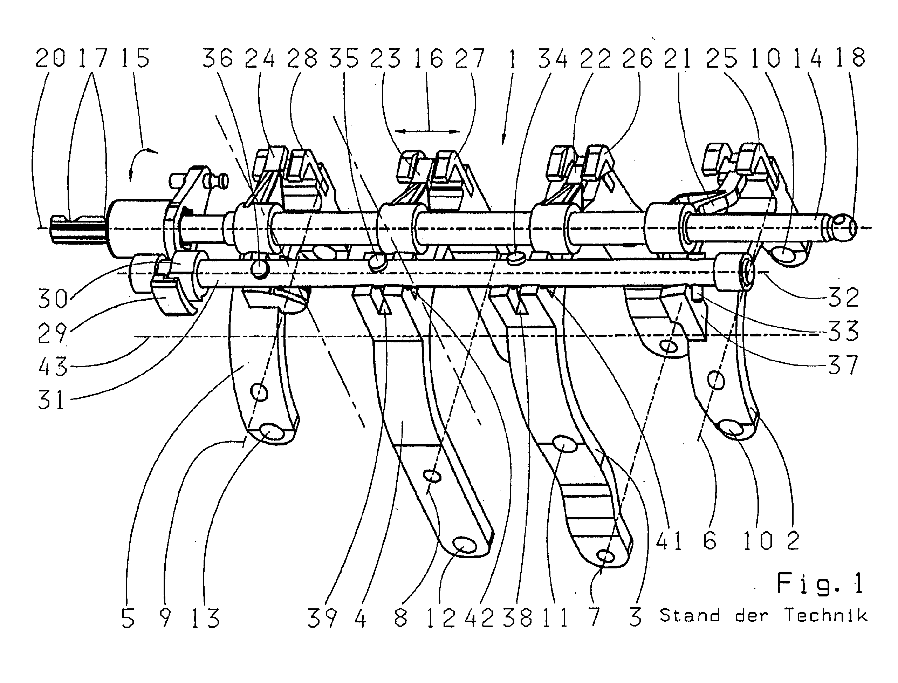

Nach der Fig. 1 besitzt eine Schalteinrichtung 1 vier Schaltschwingen 2, 3, 4, 5, die in einem nicht näher dargestellten Getriebegehäuse um Schwenkachsen 6, 7, 8, 9 schwenkbar gelagert sind. Die Schaltschwingen 2, 3, 4, 5 sind gabelförmig gestaltet und weisen im Bereich ihrer gabelförmigen Enden Lagerbohrungen 10, 11, 12, 13 auf, in denen nicht näher dargestellte Gleitsteine drehbar gelagert sind, die in Umfangsnuten von Schaltmuffen zugehöriger Schaltkupplungen gelagert sind. Die ebenfalls nicht näher dargestellten Schaltkupplungen rotieren um eine Drehachse 43. Parallel zur Drehachse 43 und quer zu den Schwenkachsen 6, 7, 8, 9 ist eine Wähl- und Schaltwelle 14 angeordnet, die im Getriebegehäuse um eine Schwenkachse 20 in der Schwenkrichtung 15 schwenkbar und in Schaltrichtung 16 axial verschiebbar gelagert ist.

Auf der Wähl- und Schaltwelle 14 sind Schaltfinger 21, 22, 23, 24 befestigt und zueinander winkelversetzt angeordnet. Bei einer Schwenkbewegung der Wähl- und Schaltwelle 14 gelangen die Schaltfinger 21, 22, 23, 24 einzeln nacheinander in Eingriff mit gabelförmigen Klauen 25, 26, 27, 28, die an den Schaltschwingen 2, 3, 4, 5 befestigt sind. Die Schaltschwingen 2, 3, 4, 5 und die Schaltfinger 21, 22, 23, 24 sind jeweils einzelnen Gängen zugeordnet. So ist beispielsweise die Schaltschwinge 2 für den Rückwärtsgang, die Schaltschwinge 3 für den ersten und zweiten Gang, die Schaltschwinge 4 für den dritten und vierten Gang und die Schaltschwinge 5 für den fünften und sechsten Gang vorgesehen.

Die Schalteinrichtung 1 ist in der Fig. 1 in einer neutralen Schaltposition dargestellt, wobei die Wähl- und Schaltwelle 14 so geschwenkt ist, daß die Schaltgasse des dritten und vierten Gangs gewählt ist, indem der Schaltfinger 23 in die Klaue 27 eingreift. Wird die Wähl- und Schaltwelle 14 in eine der beiden Schaltrichtungen 16 bewegt, wird der dritte oder vierte Gang geschaltet, indem über die Schaltschwinge 4 und die zugehörigen Gleitsteine die entsprechende Schaltkupplung eingerückt wird. In der Schaltstellung kann die Wähl- und Schaltwelle 14 über Rastnuten 17 verrastet werden. Die Wähl- und Schaltwelle 14 wird mittels eines nicht näher dargestellten Gestänges geschwenkt und axial verschoben, das an einem Kugelelement 18 an der Wähl- und Schaltwelle 14 angreift.

Damit während der Schaltung nur die angewählte Schaltschwinge 4 betätigt wird, müssen die übrigen Schaltschwingen 2, 3, und 5 verriegelt sein. Grundsätzlich sind alle Schaltschwingen 2, 3, 4, 5 stets verriegelt und nur eine Schaltschwinge 4 wird freigegeben, wenn sie durch die Schwenkbewegung der Wähl- und Schaltwelle 14 angewählt ist, indem der Schaltfinger 23 in die entsprechende Klaue 27 eingreift. Die übrigen Schaltschwingen 2, 3, 5 sind weiter mittels einer Sperrwelle 31 gesperrt, die über ein Zahnsegment 29 auf der Wähl- und Schaltwelle 14 und ein weiteres Zahnsegment 30 auf der Sperrwelle 31 trieblich mit der Wähl- und Schaltwelle 14 verbunden ist. Die triebliche Verbindung der beiden Zahnsegmente 29, 30 bildet eine Getriebestufe mit einer Übersetzung, so daß der Schwenkwinkel der Sperrwelle 31 größer ist als der Schwenkwinkel der Wähl- und Schaltwelle 14.

In die Sperrwelle 31 sind Sperrstifte 33, 34, 35, 36 eingelassen, die an Sperrflächen 37, 38, 39 der Schaltschwingen 2, 3, 4, 5 geführt sind. Die Sperrflächen 37, 38, 39 verlaufen quer zur Schaltrichtung 16 und werden bei den Schaltschwingen 3, 4, 5 durch Flanken der entsprechenden Nuten 38, 39 gebildet. Die Sperrstifte 33, 34, 35, 36 sind zueinander winkelversetzt, wobei der Winkelversatz dem Winkelversatz der Schaltfinger 21, 22, 23, 24 hunter Berücksichtigung der Übersetzungsstufe der Zahnsegmente 29 und 30 entspricht.

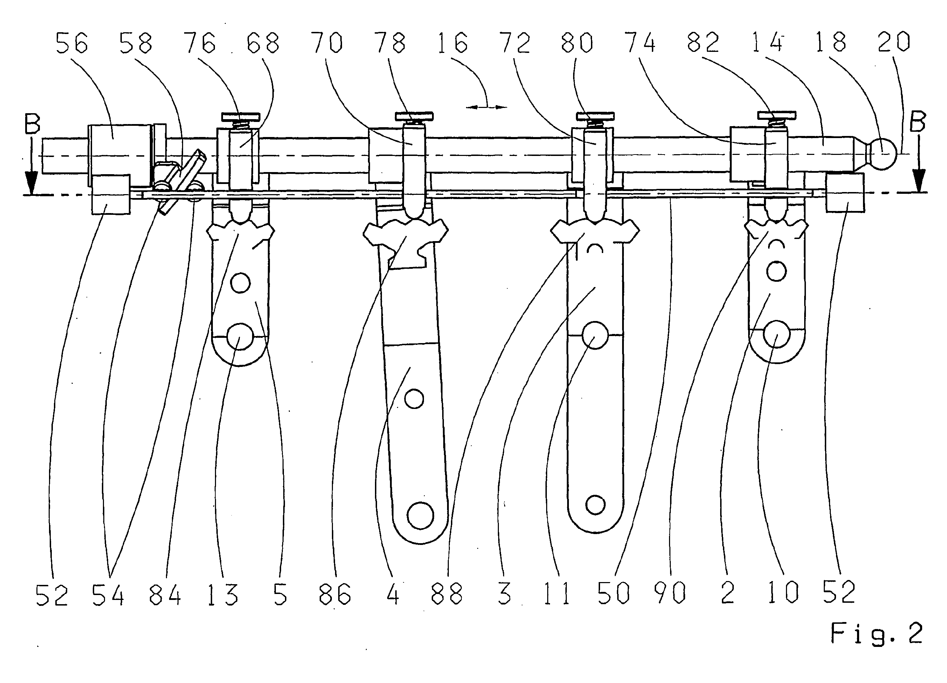

Ausgehend von diesem Stand der Technik zeigt die Fig. 2 eine Schalteinrichtung, in der gleiche Bauteile wie in der Fig. 1 auch mit gleichen Bezugszeichen versehen sind. Parallel zu der Wähl- und Schaltwelle 14 ist ein Sperrblech 50 angeordnet, das axial entlang der Schaltrichtung 16 beweglich in Lagerungen 52 im Getriebegehäuse gelagert ist. Das Sperrblech 50 ist dabei nicht verdrehbar und weist zwei Führungen 54 auf. Die Führungen 54 können in Form von Rollenlagern ausgebildet sein und wirken mit einer Wählschwinge 56 zusammen, die an der Wähl- und Schaltwelle 14 angeordnet ist. Die Wählschwinge 56 sitzt dabei axial beweglich auf der Wähl- und Schaltwelle 14, so dass bei einem Schaltvorgang die Wähl- und Schaltwelle 14 axial verschoben werden kann in Schaltrichtung 16, während die Wählschwinge 56 in Schaltrichtung 16 axial fixiert ist. Bei einer Verdrehung der Wähl- und Schaltwelle 14 wird auch die Wählschwinge 56 verdreht, wobei die Vorderseite und Rückseite der geneigten Ebene 58 an der Wählschwinge 56 mit den Führungen 54 in Kontakt steht. Dabei drückt die Vorderseite bzw. die Rückseite der geneigten Ebene 58 über die Führungen 54 das Sperrblech 50 axial in Schaltrichtung 16.

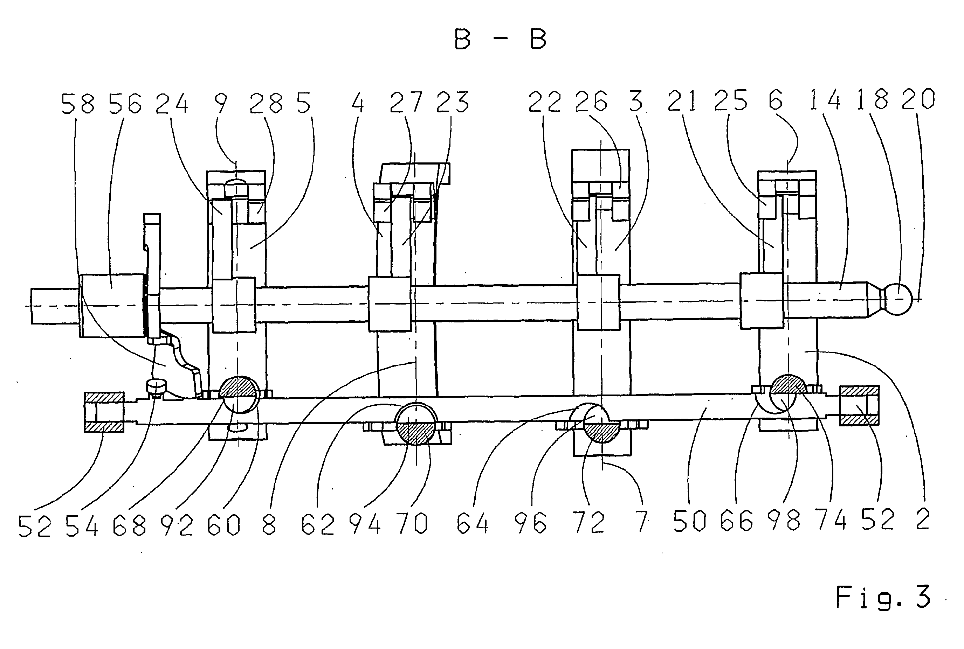

In dem Sperrblech 50 sind im Bereich der Schaltschwingen oder Schaltgabeln 2, 3, 4, 5 jeweils eine Öffnung 60, 62, 64, 66 vorgesehen (Fig. 3). Die Öffnungen 60, 62, 64, 66 sind in ihren Abmessungen so ausgebildet, dass jeweils ein Bolzen 68, 70, 72, 74 durch die jeweilige Öffnung 60, 62, 64, 66 hindurch ragen kann. Die Bolzen 68, 70, 72, 74 sind im Getriebegehäuse montiert und werden jeweils von einer Federeinrichtung 76, 78, 80, 82 in Rastennuten einer Rastenkulisse 84, 86, 88, 90 an jeder der Schaltschwingen oder Schaltgabeln 2, 3, 4, 5 gedrückt. Jede Rastenkulisse 84, 86, 88, 90 weist drei Rastennuten auf, von denen die beiden äußeren Rastennuten jeweils der Position einer geschalteten Gangstufe an dieser Schaltschwinge oder Schaltgabel 2, 3, 4, 5 entspricht, während die mittlere Rastennut einer Neutralstellung entspricht.

Die Bolzen 68, 70, 72, 74 weisen jeweils eine Aussparung 92, 94, 96, 98 auf, durch die das Sperrblech 50 hindurch ragen kann und mit dem die nicht zu schaltenden Schaltschwingen oder Schaltgabeln 2, 3, 4 oder 5 blockiert werden. Dazu ragt ein Teil des Sperrblechs 50 in die Aussparung 92, 94, 96 oder 98 hinein und hält den jeweiligen Bolzen 68, 70, 72 oder 74 in der Rastennut für die Neutralstellung fest, so dass diese Schaltschwinge oder Schaltgabel 2, 3, 4 oder 5 nicht bewegt werden kann.

Der Schaltvorgang soll anhand der Fig. 2 und der Fig. 3 kurz beschrieben werden.

In den Fig. 2 und 3 soll die Schaltschwinge 4 betätigt werden. Dazu wird mit der Wähl- und Schaltwelle 14 zunächst die Schaltschwinge 4 ausgewählt, indem die Wähl- und Schaltwelle 14 so verdreht wird, dass der Schaltfinger 23 in die Klaue 27 eingreift. Dabei verdreht die Wähl- und Schaltwelle 14 auch die Wählschwinge 56, so dass die geneigte Ebene 58 gegen die Führung 54 drückt und das Sperrblech 50 axial verschiebt. Die Verschiebung des Sperrbleches 50 positioniert die Öffnung 62 so am Bolzen 70, dass der Bolzen 70 ungehindert die Öffnung 62 durchdringen kann. Die anderen Öffnungen 60, 64 und 66 am Sperrblech 50 sind nun gegenüber ihren jeweiligen Bolzen 68, 72 und 74 derart verschoben, dass das Sperrblech 50 in die jeweiligen Aussparungen 92, 96 und 98 an den Bolzen 68, 72 und 74 hinein ragt und diese blockiert. Die Bolzen 68, 72 und 74 drücken dadurch fest in die Rastennut der Neutralstellung an den Schaltschwingen 5, 3 und 2, so dass diese nicht bewegt werden können. Der Bolzen 70 jedoch kann durch ein Verschieben der Wähl- und Schaltschwinge 14 und der Betätigung der Schaltschwinge 4 durch den Schaltfinger 23 aus der Rastennut gegen das Federelement 78 heraus gedrückt werden und gibt die Schaltschwinge 4 frei. Der Bolzen 70 wird nach Abschluß der Schaltung durch das Federelement 78 wieder in die Rastennut der geschalteten Gangstufe an der Rastenkulisse 86 gedrückt.

### Bezugszeichen

- 1: Schalteinrichtung
- 2: Schaltschwinge
- 3: Schaltschwinge
- 4: Schaltschwinge
- 5: Schaltschwinge
- 6: Schwenkachse
- 7: Schwenkachse
- 8: Schwenkachse
- 9: Schwenkachse
- 10: Lagerbohrung
- 11: Lagerbohrung
- 12: Lagerbohrung
- 13: Lagerbohrung
- 14: Wähl- und Schaltwelle
- 15: Schwenkrichtung
- 16: Schaltrichtung
- 17: Rastnut
- 18: Kugelelement
- 20: Schwenkachse
- 21: Schaltfinger
- 22: Schaltfinger
- 23: Schaltfinger
- 24: Schaltfinger
- 25: Klaue
- 26: Klaue
- 27: Klaue
- 28: Klaue
- 29: Zahnsegment
- 30: Zahnsegment
- 31: Sperrwelle
- 32: Schwenkachse
- 33: Sperrstift
- 34: Sperrstift
- 35: Sperrstift
- 36: Sperrstift
- 37: Sperrfläche
- 38: Nut
- 39: Nut
- 41: Längsnut
- 42: Längsnut
- 43: Drehachse
- 50: Sperrblech
- 52: Lagerung
- 54: Führung
- 56: Wählschwinge
- 58: geneigte Ebene
- 60: Öffnung
- 62: Öffnung
- 64: Öffnung
- 66: Öffnung
- 68: Bolzen
- 70: Bolzen
- 72: Bolzen
- 74: Bolzen
- 76: Federeinrichtung
- 78: Federeinrichtung
- 80: Federeinrichtung
- 82: Federeinrichtung
- 82: Federeinrichtung
- 84: Rastenkulisse
- 86: Rastenkulisse
- 88: Rastenkulisse
- 90: Rastenkulisse
- 92: Aussparung
- 94: Aussparung
- 96: Aussparung
- 98: Aussparung

## Patentansprüche

1. Schalteinrichtung (1) für ein mehrstufiges Schaltgetriebe mit einer verdrehbaren und axial verschiebbaren Wähl- und Schaltwelle (14), mit gabelförmigen Schaltelementen (2, 3, 4, 5) in Form von Schaltschwingen oder Schaltgabeln und mit einer Verriegelungseinrichtung (50, 68, 70, 72, 74), die beim Schalten eines der Schaltelemente (4) aus einer Neutralstellung in eine Schaltstellung die nicht zu schaltenden Schaltelemente (2, 3, 5) in ihrer Neutralstellung verriegelt, **dadurch gekennzeichnet, dass** jedem Schaltelement (2, 3, 4, 5) ein Bolzen (68, 70, 72, 74) zugeordnet ist, der lösbar in Nuten in dem Schaltelement (2, 3, 4, 5) einrastet und **dadurch** das Schaltelement (2, 3, 4, 5) in der Neutralstellung oder einer der Schaltstellungen fixiert, und die Verriegelungseinrichtung (50, 68, 70, 72, 74) ein parallel zu der Wähl- und Schaltwelle (14) angeordnetes Sperrelement (50) umfaßt, das Öffnungen (60, 62, 64, 66) aufweist, die mit den Bolzen (68, 70, 72, 74) zusammenwirken, und das Sperrelement (50) sich bei einer Verdrehung der Wähl- und Schaltwelle (14) axial bewegt und dabei an dem zu schaltenden Schaltelement (4) eine Öffnung (62) für den Bolzen (70) frei gibt und an den nicht zu schaltenden Schaltelementen (2, 3, 5) die Bolzen (68, 72, 74) in den Öffnungen (60, 64, 66) blockiert und **dadurch** die nicht zu schaltenden Schaltelemente (2, 3, 5) in ihrer Neutralstellung verriegelt.

2. Schalteinrichtung (1) nach Anspruch 1, **dadurch gekennzeichnet, dass** an der Wähl- und Schaltwelle (14) ein Übertragungselement (56, 58) vorgesehen ist, das mit Elementen (54) an dem Sperrelement (50) zusammenwirkt und das die Drehbewegung der Wähl- und Schaltwelle (14) in eine axiale Bewegung des Sperrelementes (50) überträgt.

3. Schalteinrichtung (1) nach Anspruch 2, **dadurch gekennzeichnet, dass** an der Wähl- und Schaltwelle (14) eine axial feste Wählschwinge (56) mit geneigter Ebene (58) vorgesehen ist, die mit Führungen (54) an dem Sperrelement (50) zusammenwirkt und die Drehbewegung der Wähl- und Schaltwelle (14) in eine axiale Bewegung des Sperrelementes (50) überträgt.

4. Schalteinrichtung (1) nach einem der Ansprüche 1 bis 3, **dadurch gekennzeichnet, dass** in den Bolzen (68, 70, 72, 74) Aussparungen (92, 94, 96, 98) vorgesehen sind, in die das Sperrelement (50) zur Blockierung und Verriegelung der nicht zu schaltenden Schaltelemente (2, 3, 5) in ihrer Neutralstellung eingreift.

5. Schalteinrichtung (1) nach einem der Ansprüche 1 bis 4, **dadurch gekennzeichnet, dass** Federelemente (76, 78, 80, 82) vorgesehen sind, die die Bolzen (68, 70, 72, 74) in die Nuten an den Schaltelementen (2, 3, 4, 5) drücken und die lösbare Rastierung der Bolzen (68, 70, 72, 74) gewährleisten.

6. Schalteinrichtung (1) nach einem der Ansprüche 1 bis 5, **dadurch gekennzeichnet, dass** das Sperrelement als ein flaches Sperrblech (50) ausgebildet ist.

7. Schalteinrichtung (1) nach einem der Ansprüche 1 bis 5, **dadurch gekennzeichnet, dass** das Sperrelement (50) als eine vorzugsweise runde Sperrstange ausgebildet ist.

## Claims

1. Shifting mechanism (1) for a multistage manual transmission, with a rotatable and axially displaceable selector shaft (14), with shifting components (2, 3, 4, 5) in the form of shifting levers or forks, and with a locking device (50, 68, 70, 72, 74) which arrests the shifting components (2, 3, 5) not to be shifted in their neutral position when one of the shifting components (4) is shifted from a neutral position to a shifting position, **characterized in that** each shifting component (2, 3, 4, 5) has a bolt (68, 70, 72, 74) assigned to it which engages and disengages in grooves on the shifting component (2, 3, 4, 5) and thus fixes the shifting component (2, 3, 4, 5) in neutral position or one of the shifting positions, and **in that** the locking device (50, 68, 70, 72, 74) includes a locking element (50) arranged parallel to the selector shaft (14) and featuring openings (60, 62, 64, 66) acting with the bolts (68, 70, 72, 74), and **in that** the locking element (50) performs an axial movement when the selector shaft (14) rotates, and in doing so clears an opening (62) for the bolt (70) on the shifting component (4) to be shifted while the bolts (68, 72, 74) on the shifting components (2,3,5) not to be shifted are locked in the openings (60, 64, 66) and the shifting components not to be shifted (2,3,5) are thus locked in their neutral position.

2. Shifting mechanism (1) acc. to claim 1, **characterized in that** a transmission element (56, 58) is provided on the selector shaft (14), which acts with the elements (54) on the locking element (50) and which converts the rotary movement of the selector shaft (14) into an axial movement of the locking element (50).

3. Shifting mechanism (1) acc. to claim 2, **characterized in that** the selector shaft (14) has an axially fixed selecting lever (56) with sloping surface (58), which acts with guides (54) on the locking element (50) and converts the rotary movement of the selector shaft (14) into an axial movement of the locking element (50).

4. Shifting mechanism (1) acc. to one of the claims 1 thru 3, **characterized in that** the bolts (68, 70, 72, 74) have recesses (92, 94, 96, 98) in which the locking element (50) engages to lock the shifting components (2, 3, 5) not to be shifted in their neutral position.

5. Shifting mechanism (1) acc. to one of the claims 1 thru 4, **characterized in that** spring elements (76, 78, 80, 82) are provided which press the bolts (68, 70, 72, 74) into the grooves on the shifting components (2, 3, 4, 5) and ensure releasable locking of the bolts (68, 70, 72, 74).

6. Shifting mechanism (1) acc. to one of the claims 1 thru 5, **characterized in that** the locking element is designed as a flat locking plate (50).

7. Shifting mechanism (1) acc. to one of the claims 1 thru 5, **characterized in that** the locking element (50) is preferably designed as a round locking bar.

## Revendications

1. Dispositif de changement de vitesses (1) pour une boîte mécanique à plusieurs étages doté d'un arbre de sélection et de commande (14) qui peut être entraîné en rotation et qui peut être déplacé axialement, doté d'éléments de commande fourchus (2, 3, 4, 5) en forme de réglettes de changement de vitesses ou fourchettes de changement de vitesses, et doté d'un dispositif de verrouillage (50, 68, 70, 72, 74), celui-ci verrouillant lors de l'actionnement d'un des éléments de commande (4), pour le porter d'une position de point mort à une position de commande, les éléments de commande (2, 3, 5) qui ne doivent pas être actionnés dans leur position de point mort, **caractérisé en ce que** à chacun des éléments de commande (2, 3, 4, 5) est associé un axe (68, 70, 72, 74), celui-ci s'engageant de façon dégageable dans des cannelures de l'élément de commande (2, 3, 4, 5), fixant de cette manière l'élément de commande (2, 3, 4, 5) dans la position de point mort ou dans une des positions de commande, et **en ce que** le dispositif de verrouillage (50, 68, 70, 72, 74) comprend un élément de verrouillage (50) disposé parallèlement par rapport à l'arbre de sélection et de commande (14), cet élément de verrouillage comportant des orifices (60, 62, 64, 66) coopérant avec les axes (68, 70, 72, 74), et **en ce que** l'élément de verrouillage (50) se déplace axialement lorsque l'arbre de sélection et de commande (14) est tourné, tout en libérant sur l'élément de commande (4) à actionner un orifice (62) pour l'axe (70) et en bloquant sur les éléments de commande (2, 3, 5) qui ne doivent pas être actionnés les axes (68, 72, 74) dans les orifices (60, 64, 66), en verrouillant ainsi les éléments de commande (2, 3, 5), qui ne doivent pas être actionnés, dans leur position de point mort.

2. Dispositif de changement de vitesses (1) selon la revendication 1, **caractérisé en ce que** sur l'arbre de sélection et de commande (14) est prévu un élément de transmission (56, 58) coopérant avec des éléments (54) sur l'élément de verrouillage (50) et transmettant le mouvement de rotation de l'arbre de sélection et de commande (14) en un mouvement axial de l'élément de verrouillage (50).

3. Dispositif de changement de vitesses (1) selon la revendication 2, **caractérisé en ce que** sur l'arbre de sélection et de commande (14) est prévu un basculeur de sélection (56) fixé axialement et doté d'un plan incliné (58) coopérant avec des guides (54) sur l'élément de verrouillage (50) et transmettant le mouvement de rotation de l'arbre de sélection et de commande (14) en un mouvement axial de l'élément de verrouillage (50).

4. Dispositif de changement de vitesses (1) selon une des revendications 1 à 3, **caractérisé en ce que** dans les axes (68, 70, 72, 74) sont prévus des évidements (92, 94, 96, 98) dans lesquels l'élément de verrouillage (50) s'engage pour bloquer et verrouiller les éléments de commande qui ne doivent pas être actionnés (2, 3, 5) dans leur position de point mort.

5. Dispositif de changement de vitesses (1) selon une des revendications 1 à 4, **caractérisé en ce que** sont prévus des éléments élastiques (76, 78, 80, 82) poussant les axes (68, 70, 72, 74) dans les cannelures sur les éléments de commande (2, 3, 4, 5) et assurant le verrouillage débloquable des axes (68, 70, 72, 74).

6. Dispositif de changement de vitesses (1) selon une des revendications 1 à 5, **caractérisé en ce que** l'élément de verrouillage est réalisé en tant que tôle de verrouillage plate (50).

7. Dispositif de changement de vitesses (1) selon une des revendications 1 à 5, **caractérisé en ce que** l'élément de verrouillage (50) est réalisé en tant que tige de verrouillage de préférence ronde.
